# EUROPÄISCHE PATENTANMELDUNG

(11) **EP 4 333 225 A1**
(43) Veröffentlichungstag der Anmeldung: **06.03.2024**
(21) Anmeldenummer: 23192777.3
(22) Anmeldetag: 22.08.2023
(51) Int. Cl.: H02G 3/04, H02G 3/10

(54) **KANALANORDNUNG MIT EINEM LEITUNGSFÜHRUNGSKANAL UND EINEM GERÄTETRÄGER**

(30) Priorität: 29.08.2022 DE 202022104859 U
(71) Anmelder: GGK GmbH & Co. KG, 35753 Greifenstein (DE)
(72) Erfinder: MÜLLER, Eckhard, 35781 Weilburg (DE)
(74) Vertreter: advotec.

(57) **Zusammenfassung**

Die Erfindung betrifft eine Kanalanordnung (100) mit einem insbesondere als Sockelleistenkanal ausgeführten Leitungsführungskanal (11) und einem Geräteträger (10) für die Montage mindestens eines Elektroinstallationsgerätes an dem mindestens einem Leitungsführungskanal (11), wobei der Geräteträger (10) mindestens ein Trägergehäuse (14) und einen Kanaladapter (15) umfasst, der dazu ausgebildet ist, das Trägergehäuse (14) an den mindestens einen Leitungsführungskanal (11) anzuschließen, wobei mindestens der Leitungsführungskanal (11) aus einem von Kunststoff unterschiedlichen Material ausgebildet ist und dass der Kanaladapter (15) vorzugsweise zumindest abschnittsweise an eine Querschnittskontur des Leitungsführungskanals (11) angepasst ist.

## Beschreibung

Die vorliegende Erfindung betrifft eine Kanalanordnung nach dem Oberbegriff des Schutzanspruchs 1. Die Kanalanordnung umfasst einen insbesondere als Sockelleistenkanal ausgeführten Leitungsführungskanal und einen Geräteträger für die Montage mindestens eines Elektroinstallationsgerätes an dem mindestens einem Leitungsführungskanal, wobei der Geräteträger mindestens ein Trägergehäuse und einen Kanaladapter umfasst, der dazu ausgebildet ist, das Trägergehäuse an den mindestens einen Leitungsführungskanal anzuschließen.

Kanalanordnungen und/oder Geräteträger der eingangs genannten Art dienen insbesondere zur Anbringung von Steckdosen und Schaltern an Leitungsführungskanälen, die zur Aufwandinstallation elektrischer Leitungen Verwendung finden. Dabei steht es im Fokus, ansonsten freiliegende Verkabelungen hinter einem durch die Kanalanordnung ausgebildeten Sichtschutz verschwinden zu lassen, sodass derartige Kabel nicht mehr als optische und/oder physische Störgröße im Raum wahrgenommen werden. Eine zuvor erwähnte Aufwandinstallation wird regelmäßig in Bestands- und/oder Büro- und/oder Wohngebäuden zur Kabelinstallation und/oder Spannungsversorgung von nachträglich installierten elektrischen Verbrauchern benötigt. Dabei finden für die nachträgliche Kabelverlegung und/oder Verstauung häufig Kabelkanalleisten Anwendung, die als sogenannte Sockelleistenkanäle ausgeführt sind. Diese Kabelkanalleisten haben dann eine Doppelfunktion, da sie neben einer eingehäusten Anordnung der Versorgungskabel auch noch die Ausbildung von Fuß- und/oder Sockelleisten ermöglichen.

Der nachträglichen Installation von Spannungsversorgungskabeln in Bestandsgebäuden kommt zunehmende Bedeutung zu, da der Elektrisierungsgrad bzw. die Ausstattung von Wohngebäuden mit elektrischen Aktuatoren ständig zunimmt, insbesondere in Kombination mit einer externen berührungslosen Ansteuerung der Geräte, die unter dem Begriff "Smarthome" für die Ansteuerung der Geräte via auf Smartphones herunter geladene Apps propagiert wird.

Ein Geräteträger der eingangs genannten Art, der eine Wandinstallation neben einem Sockelleistenkanal ermöglicht, ist beispielsweise aus der DE 20 2004 013 181 U1 bekannt. Zur Verbindung des Geräteträgers mit dem Sockelleistenkanal ist das Trägergehäuse des Geräteträgers so ausgebildet, dass es gleichzeitig eine Trägerbasis mit den darin angeordneten Elektroinstallationsgeräten als auch einen an den Geräteträger angrenzenden Teil des Sockelleistenkanals überdeckt. Der bekannte Geräteträger weist ein Trägergehäuse mit einer konvexen Frontseite auf, die sich mit ihrem dem Sockelleistenkanal abdeckenden Teil über eine auf einer Kanalbasis angeordneten Kanalabdeckung erstreckt, die eine plane Frontseite aufweist. Mithin zeigt die DE 20 2004 013 181 U1 eine Kombination eines Geräteträgers mit einem Sockelleistenkanal, bei der die voneinander abweichende äußere Gestaltung des Trägergehäuses und der Kanalabdeckung augenfällig ist.

Ferner kann eine gattungsgemäße Kanalanordnung der EP 3 217 497 A1 entnommen werden.

Obgleich Kanalanordnungen und/oder Geräteträger bereits bekannt sind, besteht weiterhin ein Verbesserungsbedarf, insbesondere, wenn es darum geht, eine Designfreiheit und/oder Einsetzbarkeit für einen Anwender zu erhöhen. Dabei spielt es immer häufiger eine Rolle, dass die Kanalanordnung und/oder der Geräteträger nicht eine optische und/oder physische Störgröße ausbildet, sondern sich besonders bevorzugt in eine sonstige optische-architektonische Designgebung des jeweiligen Innenraumes einfügt.

Eine Aufgabe der Erfindung besteht darin, eine weiterentwickelte Kanalanordnung vorzuschlagen, die die zuvor genannten Anforderungen zumindest teilweise erfüllt.

Zur Lösung dieser Aufgabe weist die erfindungsgemäße Kanalanordnung die Merkmale des Schutzanspruchs 1 auf.

Vorteilhafte Ausführungsformen der Erfindung sind Gegenstand der abhängigen Ansprüche. In den Rahmen der Erfindung fallen sämtliche Kombinationen aus mindestens zwei in der Beschreibung, den Ansprüchen und/oder den Figuren offenbarten Merkmalen. Es versteht sich insbesondere, dass sprachübliche Umformungen und/oder ein sinngemä-ßes Ersetzen von jeweiligen Begrifflichkeiten im Rahmen der üblichen sprachlichen Praxis, insbesondere das Verwenden von durch die allgemein anerkannte Sprachliteratur gestützten Synonymen, von dem vorliegenden Offenbarungsgehalt umfasst sind, ohne in ihrer jeweiligen Ausformulierung explizit erwähnt zu werden.

Erfindungsgemäß ist eine Kanalanordnung vorgeschlagen, die mindestens einen insbesondere als Sockelleistenkanal ausgeführten Leitungsführungskanal und mindestens einen Geräteträger für die Montage mindestens eines Elektroinstallationsgerätes an dem mindestens einem Leitungsführungskanal umfasst, wobei der Geräteträger mindestens ein Trägergehäuse und einen Kanaladapter umfasst, der dazu ausgebildet ist, das Trägergehäuse an den mindestens einen Leitungsführungskanal anzuschließen. Die erfindungsgemäße Kanalanordnung ist dadurch gekennzeichnet, dass mindestens der eine Leitungsführungskanal aus einem von Kunststoff unterschiedlichen Material ausgebildet ist, und dass der Kanaladapter vorzugsweise jedoch nicht zwingend zumindest abschnittsweise an eine Querschnittskontur des Leitungsführungskanals angepasst ist. Mit anderen Worten ist die erfindungsgemäße Kanalanordnung dadurch gekennzeichnet, dass mindestens der Sockelleistenkanal bzw. der Leitungsführungskanal frei von Kunststoff ist, also insbesondere keinen Kunststoff umfassen und/oder nicht aus einem kunststoffaufweisenden Material hergestellt ist. Der Kanaladapter ist vorzugsweise derart geformt, dass er sich zumindest abschnittsweise an eine Kontur und/oder Oberflächenkontur und/oder eine Querschnittskontur des Leitungsführungskanals anschmiegt und/oder mit dieser flächenbündig ist. Bevorzugt gleicht der Kanaladapter besonders im Bereich seiner Frontkontur, die insbesondere von einer Montagewand hinweg weist, der Querschnittskontur des Leitungsführungskanals. Grundsätzlich kann der Kanaladapter aber auch von der Kontur des Leitungsführungskanals unterschiedlich ausgebildet sein, beispielsweise wenn der Kanaladapter weitere Designaspekte und/oder eine von dem Leitungsführungskanal abweichende Farb- und/oder Formgebung erfüllen soll. Die Querschnittskontur ist vorzugsweise bezogen auf einen Querschnitt, der quer zu einer Längserstreckung des Leitungsführungskanals ausgerichtet ist. Der mindestens eine Leitungsführungskanal ist vorzugsweise ein Kabelführungskanal, der ausgebildet ist, mindestens ein elektrisches Leitungskabel aufzunehmen. Der Leitungsführungskanal umfasst hierzu vorzugsweise an einer zu einer Wand gerichteten Innenseite, an dem der Leitungsführungskanal montiert wird, mindestens eine entlang seiner Längserstreckung verlaufende Ausnehmung, die dazu dient, das mindestens eine Leitungskabel aufzunehmen. Das Elektroinstallationsgerät ist nicht notwendigerweise Teil der erfindungsgemäßen Kanalanordnung, sondern bildet lediglich eine optionale Zusatzkomponente, die mit dem Geräteträger zusammenwirkt. Erfindungsgemäß ist es dadurch möglich, durch den speziell in Abhängigkeit der Querschnittskontur des mindestens einen Leitungsführungskanals ausgebildeten Kanaladapter ein äußeres Erscheinungsbild des Geräteträgers an ein äußeres Erscheinungsbild des Leitungsführungskanals anzupassen. Dies ist vorzugsweise allein durch eine Auswahl eines an die äußere Ausgestaltung des Leitungsführungskanals, angepassten Kanaladapter möglich. Hierdurch ist es möglich, den Kanaladapter und den mindestens einen Leitungsführungskanal in optisch homogener Weise aufeinander abzustimmen, obwohl der Leitungsführungskanal erfindungsgemäß nicht aus Kunststoff hergestellt ist, sondern ein anderes Material umfasst. Im Stand der Technik war dies nur möglich, wenn auch der Leitungsführungskanal aus Kunststoff ausgebildet war, was jedoch nicht in jeder Design- und/oder Inneneinrichtungssituation gewünscht ist. Damit ist erfindungsgemäß eine Variabilität in der äußeren Ausgestaltung der die äußere Erscheinung der Kanalanordnung prägenden Bestandteile ermöglicht. Hierdurch kann die Designfreiheit gegenüber dem Stand der Technik erhöht werden. Dadurch ist nicht nur eine Anpassung an besondere Architekturstile, sondern darüber hinaus auch die Berücksichtigung individueller Vorlieben bei der Innenraumausgestaltung der Bewohner ermöglicht. Im Ergebnis trägt somit die erfindungsgemäße Ausgestaltung der Kanalanordnung zu einer wesentlichen Erhöhung der Akzeptanz der nachträglichen Aufwandinstallation von Kabelkanalsystemen in Bestandsgebäuden der unterschiedlichsten Epochen und Architekturstile bei.

In einer bevorzugten Ausführungsform ist der mindestens eine Leitungsführungskanal aus einem Holzmaterial und/oder aus einem Glasmaterial und/oder aus einem Steinmaterial und/oder einem Keramikmaterial hergestellt. Der Leitungsführungskanal kann aus einer Materialmischung hergestellt sein. Der Leitungsführungskanal kann mehrere Holzarten und/oder Glasarten und/oder Steinarten und/oder Keramiken umfassen bzw. aus diesen hergestellt sein. Zudem ist es grundsätzlich möglich, dass der Leitungsführungskanal beispielsweise mit einem Teppichbelag und/oder einem sonstigen Belag beklebt und/oder beschichtet ist.

In einer bevorzugten Ausführungsform ist auch der Kanaladapter aus einem von Kunststoff unterschiedlichen Material ausgebildet. Dabei können für den Kanaladapter vorzugsweise die für den Leitungsführungskanal genannten Materialen und/oder Materialkombinationen eingesetzt werden. Besonders bevorzugt sind der Leitungsführungskanal und der Kanaladapter aus demselben Material hergestellt. Dies hat insbesondere den Vorteil, dass nicht nur durch die gleichen bzw. miteinander im Wesentlichen übereinstimmenden Querschnittskonturen von dem Kanaladapter und dem Leitungsführungskanal ein homogenes optisches Erscheinungsbild ermöglicht ist, sondern dies auch materialseitig hergestellt ist. Zudem hat ein derartig ausgebildeter Kanaladapter den Vorteil, dass er haptisch bzw. von seiner Oberflächenstruktur zu dem mindestens einen Leitungsführungskanal passt. Hierdurch können die Designfreiheit sowie die Akzeptanz für die Verwendung von Kanalanordnungen weiter erhöht werden.

In einer bevorzugten Ausführungsform ist der Kanaladapter aus einem Kunststoffmaterial hergestellt. Besonders bevorzugt ist der Kanaladapter in seiner Farbgebung und/oder seinem Dekor und/oder seiner Formgebung auf den Leitungsführungskanal abgestimmt. Mit anderen Worten umfasst der Kanaladapter aus Kunststoff vorzugsweise eine Farbe und/oder ein Dekor und/oder eine Oberflächenstruktur und/oder eine Formgebung und/oder eine Außenoberfläche und/oder ein Relief und/oder dergleichen, das bzw. die an den Leitungsführungskanal angepasst ist.

In einer bevorzugten Ausführungsform sind der Kanaladapter und das Trägergehäuse als separate Bauteile ausgebildet. Auch hierdurch kann die Designfreiheit weiter gesteigert werden, da der Kanaladapter hinsichtlich seines Materials sowie seiner Formgebung nicht an das restliche Trägergehäuse gebunden ist. Somit kann das Trägergehäuse beispielsweise aus Kunststoff ausgebildet sein, wohingegen der Kanaladapter aus einem von Kunststoff abweichenden Material hergestellt ist.

Wenn der Kanaladapter austauschbar mit dem Trägergehäuse verbunden ist, ist nicht nur eine vom Trägergehäuse unabhängige Handhabung des Kanaladapters möglich, sondern eine Handhabung des Trägergehäuses zusammen mit dem Kanaladapter als Montageeinheit, sodass eine separate Ausgestaltung des Kanaladapters im Vergleich zu der aus dem Stand der Technik bekannten in das Trägergehäuse integrierten Ausgestaltung des Kanaladapters keine Erhöhung des Montageaufwands bedingt.

In einer bevorzugten Ausführungsform ist/sind der Kanaladapter reversibel lösbar, insbesondere durch eine Steckverbindung mit dem Trägergehäuse und/oder dem Leitungsführungskanal verbunden. Eine besonders einfache und komfortable Art und Weise der Verbindung zwischen dem Kanaladapter und dem Trägergehäuse wird möglich, wenn der Kanaladapter mittels einer Steckverbindung mit dem Trägergehäuse verbunden ist. Die Steckverbindung kann beispielsweise als Eingriffsverbindung ausgebildet sein. Dabei kann an dem Kanaladapter beispielsweise trägergehäuseseitig und/oder leitungsführungskanalseitig ein Verbindungssteg ausgebildet sein, der mit einer an dem Trägergehäuse und/oder dem Leitungsführungskanal ausgebildeten Aufnahmenut zusammenwirkt und/oder in diese eingreift. Auch eine umgekehrt ausgestaltete Ausbildung ist denkbar. Grundsätzlich sind auch andere Verbindungsarten, beispielsweise eine Klemmverbindung und/oder eine Clipsverbindung und/oder eine Schraubverbindung zur Anbringung des Kanaladapters an dem Trägergehäuse und/oder dem Leitungsführungskanal möglich.

In einer bevorzugten Ausführungsform ist der Kanaladapter aus einer Vielzahl von vorgefertigten Kanaladaptern in Abhängigkeit des mindestens einen Leitungsführungskanals und/oder der Querschnittskontur des mindestens einen Leitungsführungskanals auswählbar. Hierdurch kann beispielsweise ein Bausatz und/oder ein Montagebausatz bereitgestellt werden, der beispielsweise standardisiert oder individualisiert und derart an unterschiedlichste Gegebenheiten in einem Gebäudeinnenraum angepasst sein kann. Derart kann beispielsweise ein zu einem jeweiligen Leitungsführungskanal bzw. zu einer Kontur eines jeweiligen Leitungsführungskanals und/oder zu einem Material eines jeweiligen Leitungsführungskanals passender Kanaladapter aus dem Bausatz ausgewählt werden.

In einer bevorzugten Ausführungsform umfasst der Geräteträger eine Trägerbasis, die dazu ausgebildet ist, das mindestens eine Elektroinstallationsgerät aufzunehmen. Vorzugsweise ist das Trägergehäuse dazu ausgebildet, die Trägerbasis und den Kanaladapter aufzunehmen. Grundsätzlich kann der Geräteträger weitere Bauteile und/oder Komponenten umfassen. Die Trägerbasis umfasst vorzugsweise einen Verbindungsabschnitt durch den der Kanaladapter mit der Trägerbasis verbunden werden kann. Die Trägerbasis kann hierzu vorzugsweise die bereits zuvor erwähnte Nut oder den zuvor erwähnten Steg umfassen. Grundsätzlich ist auch die Ausbildung eines alternativen oder ergänzenden Eingriffsabschnittes an der Trägerbasis möglich, um den Kanaladapter daran zu befestigen.

In einer bevorzugten Ausführungsform bildet der Kanaladapter eine Abdeckung einer Kanalbasis des Leitungsführungskanals, wobei die Kanalbasis und/oder der Leitungsführungskanal an einer Wand montierbar ist/sind. In diesem Fall ist der Leitungsführungskanal mehrteilig ausgebildet. Mit anderen Worten bildet der Kanaladapter vorzugsweise die Abdeckung zu der zur Wandmontage ausgebildeten Kanalbasis, sodass der Kanaladapter in einem unmittelbar an den Geräteträger angrenzenden Bereich die Kanalabdeckung ausbildet und somit optisch vorzugsweise Mitbestandteil der Kanalabdeckung des Leitungsführungskanals ist. Hierdurch wird ein besonders hoher Grad einer optischen Integration des Geräteträgers in die Kanalabdeckung des Leitungsführungskanals ermöglicht.

Alternativ oder ergänzend kann der Leitungsführungskanal jedoch einstückig bzw. einteilig ausgebildet sein und insbesondere eine zu einer Montagewand gerichtete Ausnehmung umfassen, die dazu ausgebildet ist, mindestens ein Leitungskabel aufzunehmen.

In einer bevorzugten Ausführungsform umfasst das Trägergehäuse eine Anschlussseite und eine der Anschlussseite gegenüberliegende Blendenseite, wobei die Anschlussseite des Trägergehäuses eine Ausnehmung umfasst, die ausgebildet ist, den Kanaladapter aufzunehmen. Vorzugsweise weist das Trägergehäuse an der Anschlussseite zum Anschluss an den Kanaladapter in einer Gehäusewand eine Ausnehmung zur Aufnahme eines an einer Anschlussseite des Kanaladapters ausgebildeten Anschlusseinrichtung auf, sodass trotz der vom Trägergehäuse unabhängigen Ausgestaltung des Kanaladapters eine besonders kompakte Verbindung zwischen dem Trägergehäuse und dem Kanaladapter möglich wird, bei der die Anschlusseinrichtung des Kanaladapters vorzugsweise einen optisch homogenen Wandbestandteil der Gehäusewand des Trägergehäuses ausbildet.

In einer bevorzugten Ausführungsform umfasst die Kanalanordnung das mindestens eine Elektroinstallationsgerät. Besonders bevorzugt umfasst die Kanalanordnung mehrere Geräteträger, mehrere Leitungsführungskanäle und mehrere Elektroinstallationsgeräte, sodass beispielsweise eine nachträgliche Elektrifizierung einer Räumlichkeit durch die erfindungsgemäße Kanalanordnung zumindest im Bereich der Außenwände und/oder Trennwände ermöglicht ist.

In einer bevorzugten Ausführungsform umfasst das Elektroinstallationsgerät einen Montagerahmen und die Trägerbasis eine Anschlusseinrichtung, die an den Montagerahmen anschließbar bzw. an diesen angeschlossen ist. Vorzugsweise ist der Montagerahmen zusammen mit dem Elektroinstallationsgerät als Montageeinheit mit der Anschlusseinrichtung verbindbar. Dadurch können beispielsweise verschiedene Baueinheiten, jeweils umfassend ein Elektroinstallationsgerät und einen Geräteträger, die vorzugsweise hinsichtlich des Montagerahmens und der Anschlusseinrichtung kompatibel sind, bei der erfindungsgemäßen Kanalanordnung zum Einsatz kommen. Ein Kunde kann dann je nach Bedarf und/oder örtlicher Gegebenheit aus einer Vielzahl von möglichen Elektroinstallationsgeräten und/oder hierzu korrespondierenden Geräteträgern auswählen, die dann vor Ort zur Installation jeweils als Baueinheit bereitgestellt werden. Jedes dieser Baueinheiten kann mit einer Vielzahl von Kanaladaptern korrespondieren, sodass vor Ort oder im Voraus zu jeder individuellen Baueinheit in Abhängigkeit des jeweiligen Leitungsführungskanals ein hierzu passender Kanaladapter ausgewählt werden kann.

Vorzugsweise ist die an der Anschlussseite des Trägergehäuses ausgebildete Ausnehmung mit einem gegen die an der Anschlussseite des Kanaladapters ausgebildete Anschlusseinrichtung austauschbaren Gehäusewandeinsatz versehen, sodass im Bedarfsfall auch eine vom Kanaladapter unabhängige Verwendung des Trägergehäuses möglich ist, bei der die Wandausnehmung durch den Gehäusewandeinsatz verschlossen ist und somit eine die Trägerbasis allseitig umschließende elektrisch sichere Abdeckung von dem Geräteträger aufgenommenen Elektroinstallationsgeräten, also beispielsweise Steckdosen oder Schaltern, möglich ist.

Vorzugsweise sind sowohl eine Längsseite als auch eine Querseite des Trägergehäuses als Anschlussseite ausgebildet, die jeweils einen in einer Ausnehmung einer Gehäusewand angeordneten Gehäusewandeinsatz aufweisen, sodass das Trägergehäuse an unterschiedlichen Anschlussseiten in grundsätzlich gleicher Art und Weise mit dem Kanaladapter verbindbar ist. Hierdurch wird etwa bei Trägergehäusen, die ungleich lange Längs- und Querseiten aufweisen, also insbesondere bei rechteckförmig ausgebildeten Trägergehäusen, die in der Regel zur Kombination mit Trägerbasen dienen, die eine Mehrzahl von Elektroinstallationsgeräten in Reihenanordnung aufnehmen, sowohl eine Installation in Vertikalausrichtung als auch in Horizontalausrichtung möglich.

Es versteht sich, dass die zuvor genannten und nachstehend noch zu erläuternden Ausführungsformen und Ausführungsbeispiele nicht nur einzeln, sondern auch in beliebiger Kombination miteinander ausbildbar sind, ohne den Umfang der vorliegenden Erfindung zu verlassen. Ebenfalls versteht es sich, dass die zuvor genannten und nachstehend noch zu erläuternden Ausführungsformen und Ausführungsbeispiele sich in äquivalenter oder zumindest ähnlicher Art und Weise auf sämtliche Ausführungen der Erfindung beziehen, ohne jeweils separat genannt zu werden.

Ausführungsformen der Erfindung sind in den Zeichnungen schematisiert dargestellt und werden nachfolgend beispielhaft erläutert.

Es zeigen:
- **Fig. 1**: eine erste Kanalanordnung mit einem Geräteträger in Vertikalausrichtung an einem Leitungsführungskanal;
- **Fig. 2**: die Kanalanordnung gemäß Fig. 1 in seitlicher Ansicht;
- **Fig. 3**: die Kanalanordnung gemäß Fig. 2 in einer Explosionsansicht;
- **Fig. 4**: eine zweite Kanalanordnung mit einem Geräteträger an einem Leitungsführungskanal;
- **Fig. 5**: die Kanalanordnung gemäß Fig. 4 in seitlicher Ansicht;
- **Fig. 6**: die Kanalanordnung gemäß Fig. 5 in einer Explosionsansicht;
- **Fig. 7**: eine dritte Kanalanordnung mit einem Geräteträger in Horizontalausrichtung an einem Leitungsführungskanal;
- **Fig. 8**: die Kanalanordnung gemäß Fig. 7 in seitlicher Ansicht;
- **Fig. 9**: die Kanalanordnung gemäß Fig. 8 in einer Explosionsansicht;
- **Fig. 10**: eine vierte Kanalanordnung mit einem Geräteträger in Horizontalausrichtung an einem Leitungsführungskanal;
- **Fig. 11**: die Kanalanordnung gemäß Fig. 10 in seitlicher Ansicht;
- **Fig. 12**: die Kanalanordnung gemäß Fig. 11 in einer Explosionsansicht;
- **Fig. 13**: eine Detailansicht eines Leitungsführungskanals;
- **Fig. 14**: **eine** Querschnittsansicht des in Fig. 13 gezeigten Leitungsführungskanals.

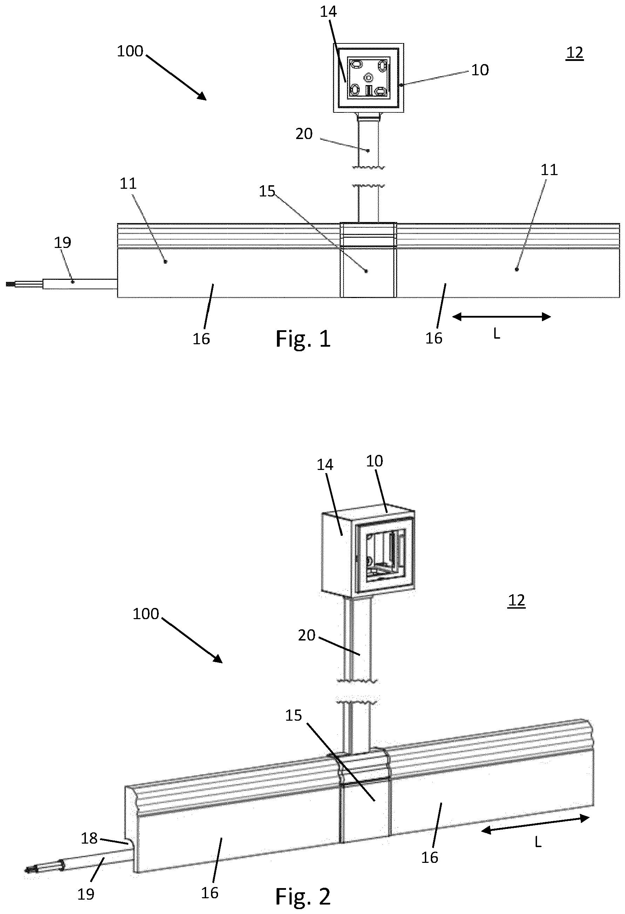

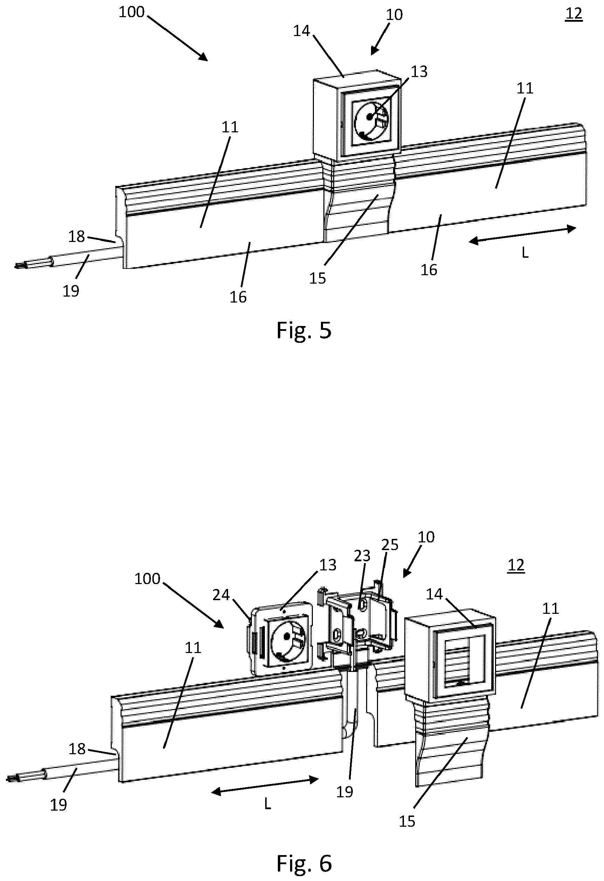

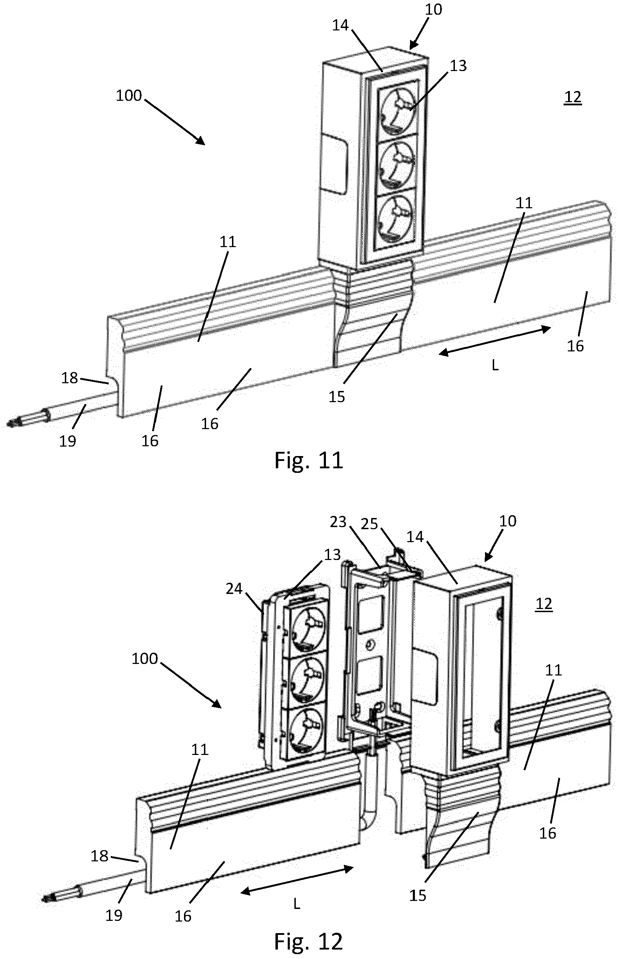

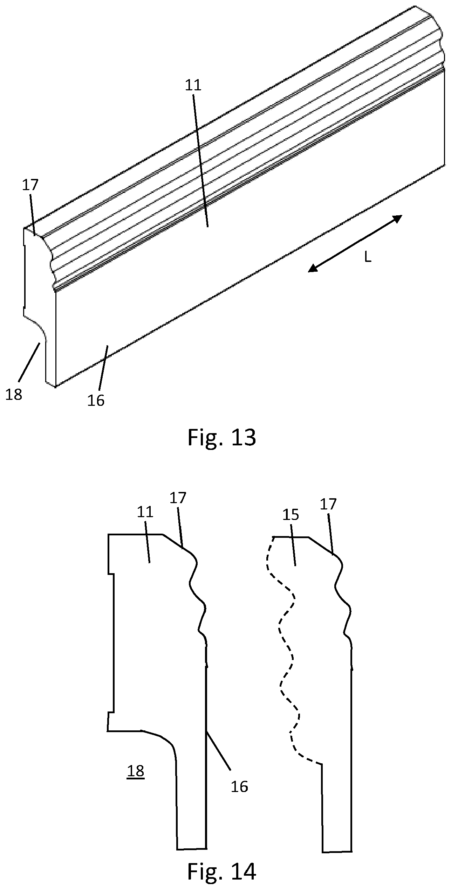

In den **Fig. 1 bis 14** sind unterschiedliche Kanalanordnungen gemäß Ausführungsbeispielen der vorliegenden Erfindung gezeigt. Eine jeweilige Kanalanordnung ist mit dem Bezugszeichen 100 versehen.

**Fig. 1** zeigt ein erstes Ausführungsbeispiel der Kanalanordnung 100. Die Kanalanordnung 100 umfasst einen Geräteträger 10 und einen Leitungsführungskanal 11. Der Leitungsführungskanal 11 ist vorzugsweise eine Sockelleiste bzw. ein Kabelkanal bzw. eine Bodenleiste. Der mindestens eine Leitungsführungskanal 11 ist erfindungsgemäß aus einem von Kunststoff unterschiedlichen Material ausgebildet bzw. hergestellt. Der Leitungsführungskanal 11 kann beispielsweise aus einem Holzmaterial und/oder aus einem Glasmaterial und/oder aus einem Steinmaterial und/oder einem Keramikmaterial hergestellt sein. Der Geräteträger 10 ist vorliegend bezogen auf eine Längserstreckung L des Leitungsführungskanals 11 in einer Vertikalausrichtung an einer Montagewand 12 angeordnet. Die Montagewand 12 kann eine Gebäudeinnenwand sein. Der mindestens eine Leitungsführungskanal 11 ist vorzugsweise an einem bodenseitigen Randbereich der Montagewand 12 an dieser angeordnet. Der Geräteträger 10 ist vorzugsweise, ausgehend von einem Boden oberhalb des Leitungsführungskanals 11 angeordnet.

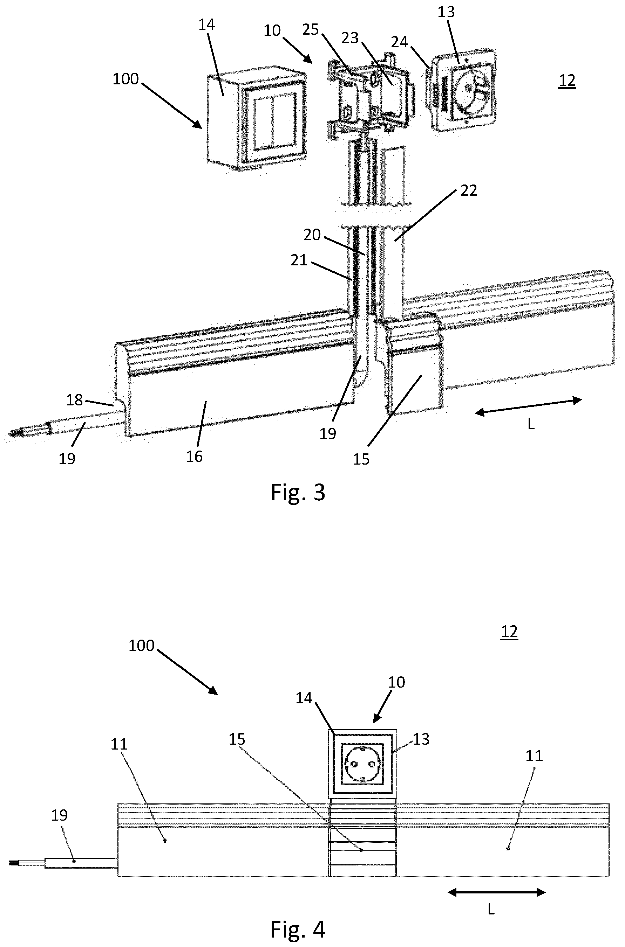

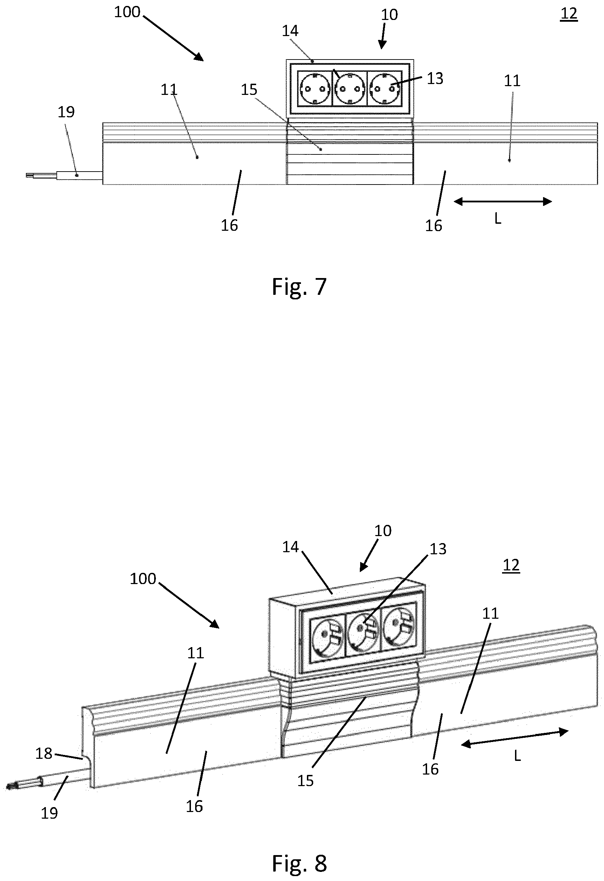

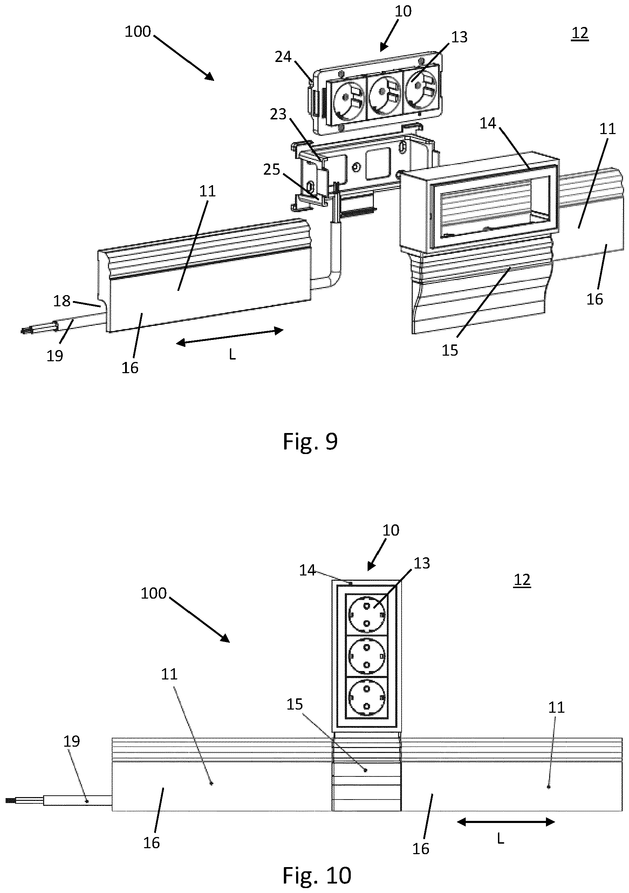

Der Geräteträger 10 ist im Falle von **Fig. 1** zur Aufnahme von einem beispielhaft als Steckdose ausgebildeten Elektroinstallationsgerät 13 ausgebildet (siehe Fig. 2). In den **Fig. 1 und 2** ist der Geräteträger 10 der Übersichtlichkeit halber zunächst ohne das Elektroinstallationsgerät 13 dargestellt. Durch den Geräteträger 10 kann das Elektroinstallationsgerät 13 an der Montagewand 12 montiert werden. In den **Fig. 2** **und** **3** ist das Elektroinstallationsgerät 13 im Vergleich zu den **Fig. 4 bis 6** weiter oberhalb des Leitungsführungskanal 11 angeordnet. Gemäß den **Fig. 7 bis 9** umfasst das mindestens eine Elektroinstallationsgerät 13 eine Mehrfachsteckdose, die vorliegend als Dreifach-Steckdose in einer horizontalen Reihenanordnung (bezogen auf die Längserstreckung L) ausgebildet ist. Gemäß den **Fig. 10 bis 12** ist das mindestens eine Elektroinstallationsgerät 13 ebenfalls als Dreifach-Steckdose in einer Reihenschaltung ausgebildet, allerdings im gezeigten Fall in einer Vertikalanordnung, bezogen auf die Längserstreckung L.

Der Geräteträger 10 weist ein Trägergehäuse 14 sowie einen mit dem Trägergehäuse 14 reversibel lösbar verbundenen Kanaladapter 15 auf. Der Kanaladapter 15 kann beispielsweise über eine Steckverbindung mit dem Trägergehäuse 14 verbunden sein. Der Kanaladapter 15 überdeckt eine Frontseite 16 des mindestens einen Leitungsführungskanals 11, die als Kanalabdeckung ausgebildet ist. Besonders bevorzugt ist der Kanaladapter 15 zumindest abschnittsweise, d.h. nicht notwendigerweise entlang einer gesamten Umfangskontur an eine Querschnittskontur 17 des Leitungsführungskanals 11 angepasst (siehe Fig. 1 bis 3 und 13 bis 14). Dies ist jedoch nicht unbedingt notwendig, da der Kanaladapter 15 auch eine von der Frontseite 16 abweichende Form-, Farb- und/oder Konturgebung umfassen kann (siehe Fig. 4 bis 12).

Der Leitungsführungskanal 11 umfasst an seiner in Richtung der Montagewand 12 zeigenden Innenseite, die der Frontseite 16 gegenüberliegt, eine Ausnehmung 18, die dazu eingerichtet ist, mindestens ein elektrisches Leitungskabel 19 aufzunehmen, um dieses gegenüber einer Umgebung zu verbergen bzw. zu verblenden. Die Ausnehmung 18 ist durch eine innenseitige Konturgebung, betrachtet in Richtung der Montagewand 12, ausgebildet. Der Leitungsführungskanal 11 ist vorliegend einteilig ausgebildet, kann jedoch in anderen Ausführungen auch zweiteilig ausgebildet sein und beispielsweise eine Kanalbasis aufweisen. Das Leitungskabel 19 ist dazu ausgebildet, das mindestens eine Elektroinstallationsgerät 13 mit elektrischem Strom von einer externen, nicht näher genannten Stromquelle zu versorgen. Bei der Stromquelle kann es sich beispielsweise um einen Hauptversorgungsanschluss in einem Gebäude und/oder einem Raum handeln.

Um einen Abstand von dem Elektroinstallationsgerät 13 zu dem mindestens einen Leitungsführungskanal 11 zu variieren, kann die Kanalanordnung 100 einen zusätzlichen Kabelkanal 20 umfassen (siehe Fig. 1 bis 3). Der Kabelkanal 20 kann eine Kabelkanalbasis 21 und eine Kabelkanalblende 22 umfassen (siehe Fig. 3).

Vorliegend ist der mindestens eine Leitungsführungskanal 11 in einem Bereich, in dem der Kanaladapter 15 angeordnet ist, aufgetrennt sodass zwei Bestandteile des Leitungsführungskanals 11 im Bereich des Kanaladapters 15 voneinander beabstandet sind. Derart kann das Leitungskabel 19 aus der Ausnehmung 18 herausgeführt und vorzugsweise vertikal nach oben (weg von einem Boden) in Richtung des Elektroinstallationsgerätes 13 bzw. des Geräteträgers 10 geführt werden. Bei den beiden Bestandteilen des Leitungsführungskanals 11 kann es sich um einen einzigen Leitungsführungskanal 11 handeln, der in diesem Bereich auseinandergetrennt ist, oder es handelt sich um zwei voneinander unterschiedliche Leitungsführungskanäle, die in diesem Bereich lediglich mit einer vorbestimmten Beabstandung voneinander an der Montagewand 12 angeordnet sind, um derart das Leitungskabel 19 aus der Ausnehmung 18 heraus nach oben wegzuführen. Die Führung des Leitungskabels 19 kann vorzugsweise durch den Kabelkanal 20 erfolgen, im Falle, dass der Geräteträger 10 weiter von dem Leitungsführungskanal 11 beabstandet ist, oder das Leitungskabel 19 wird unmittelbar aus der Ausnehmung 18 heraus in den Geräteträger 10 geführt.

Der Geräteträger 10 umfasst vorliegend eine Trägerbasis 23, die dazu ausgebildet ist, das mindestens eine Elektroinstallationsgerät 13 aufzunehmen. Das Trägergehäuse 14 ist dazu ausgebildet, die Trägerbasis 23 und den Kanaladapter 15 aufzunehmen (siehe Fig. 3, 6, 9 und 12). Hierzu weist die Trägerbasis 23 vorzugsweise eine Ausnehmung 18 zur Aufnahme des Kanaladapters 15 auf.

Das Elektroinstallationsgerät 13 umfasst ferner einen Montagerahmen 24 und die Trägerbasis 23 eine Anschlusseinrichtung 25, die an den Montagerahmen 24 angeschlossen bzw. mit diesem insbesondere integral verbunden ist, wobei der Montagerahmen 24 zusammen mit dem Elektroinstallationsgerät 13 als Montageeinheit mit der Anschlusseinrichtung 25 verbunden ist.

## Patentansprüche

1. Kanalanordnung (100) mit einem insbesondere als Sockelleistenkanal ausgeführten Leitungsführungskanal (11) und einem Geräteträger (10) für die Montage mindestens eines Elektroinstallationsgerätes (13) an dem mindestens einem Leitungsführungskanal (11), wobei der Geräteträger (10) mindestens ein Trägergehäuse (14) und einen Kanaladapter (15) umfasst, der dazu ausgebildet ist, das Trägergehäuse (14) an den mindestens einen Leitungsführungskanal (11) anzuschlie-ßen,
**dadurch gekennzeichnet,**
**dass** mindestens der Leitungsführungskanal (11) aus einem von Kunststoff unterschiedlichen Material ausgebildet ist und dass der Kanaladapter (15) vorzugsweise zumindest abschnittsweise an eine Querschnittskontur des Leitungsführungskanals (11) angepasst ist.

2. Kanalanordnung nach Anspruch 1,
**dadurch gekennzeichnet,**
**dass** der mindestens eine Leitungsführungskanal (11) aus einem Holzmaterial und/oder aus einem Glasmaterial und/oder aus einem Steinmaterial und/oder einem Keramikmaterial hergestellt ist.

3. Kanalanordnung nach Anspruch 1 oder 2,
**dadurch gekennzeichnet,**
**dass** der Kanaladapter (15) aus einem von Kunststoff unterschiedlichen Material ausgebildet ist.

4. Kanalanordnung nach einem der vorstehenden Ansprüche,
**dadurch gekennzeichnet,**
**dass** der Leitungsführungskanal (11) und der Kanaladapter (15) aus demselben Material hergestellt sind.

5. Kanalanordnung nach einem der Ansprüche 1 bis 3,
**dadurch gekennzeichnet,**
**dass** der Kanaladapter (15) aus einem Kunststoffmaterial hergestellt ist und vorzugsweise in seiner Farbgebung und/oder seinem Dekor und/oder seiner Formgebung auf die Leitungsführungskanal (11) abgestimmt ist.

6. Kanalanordnung nach einem der vorstehenden Ansprüche,
**dadurch gekennzeichnet,**
**dass** der Kanaladapter (15) und das Trägergehäuse (14) als separate Bauteile ausgebildet sind.

7. Kanalanordnung nach einem der vorstehenden Ansprüche,
**dadurch gekennzeichnet,**
**dass** der Kanaladapter (15) reversibel lösbar, insbesondere durch eine Steckverbindung mit dem Trägergehäuse (14) und/oder dem Leitungsführungskanal (11) verbunden ist/sind.

8. Kanalanordnung nach einem der vorstehenden Ansprüche,
**dadurch gekennzeichnet,**
**dass** der Kanaladapter (15) aus einer Vielzahl von vorgefertigten Kanaladaptern (15) in Abhängigkeit des mindestens einen Leitungsführungskanals (11) und/oder der Querschnittskontur des mindestens einen Leitungsführungskanals (11) auswählbar ist.

9. Kanalanordnung nach einem der vorstehenden Ansprüche,
**dadurch gekennzeichnet,**
**dass** der Geräteträger (10) eine Trägerbasis (23) umfasst, die dazu ausgebildet ist, das mindestens eine Elektroinstallationsgerät (13) aufzunehmen, und das Trägergehäuse (14) dazu ausgebildet ist, die Trägerbasis (23) und den Kanaladapter (15) aufzunehmen.

10. Kanalanordnung nach einem der vorstehenden Ansprüche,
**dadurch gekennzeichnet,**
**dass** der Kanaladapter (15) eine Abdeckung des Leitungsführungskanals (11) bildet, wobei der Leitungsführungskanal (11) an einer Wand montierbar ist/sind.

11. Kanalanordnung nach einem der vorstehenden Ansprüche,
**dadurch gekennzeichnet,**
**dass** Leitungsführungskanal (11) einstückig und/oder einteilig ausgebildet ist und insbesondere eine zu einer Montagewand (12) gerichtete Ausnehmung (18) umfasst, die dazu ausgebildet ist, mindestens ein Leitungskabel (19) aufzunehmen.

12. Kanalanordnung nach einem der vorangehenden Ansprüche,
**dadurch gekennzeichnet,**
**dass** das Trägergehäuse (14) eine Anschlussseite und eine der Anschlussseite gegenüberliegende Blendenseite umfasst, wobei die Anschlussseite des Trägergehäuses (14) eine Ausnehmung umfasst, die ausgebildet ist, den Kanaladapter (15) aufzunehmen.

13. Kanalanordnung nach einem der vorangehenden Ansprüche,
**dadurch gekennzeichnet,**
**dass** die Kanalanordnung (100) das mindestens eine Elektroinstallationsgerät (13) umfasst.

14. Kanalanordnung nach Anspruch 13,
**dadurch gekennzeichnet,**
**dass** das Elektroinstallationsgerät (13) einen Montagerahmen (24) und die Trägerbasis (23) eine Anschlusseinrichtung (25) umfasst, die an den Montagerahmen (24) anschließbar ist, wobei der Montagerahmen (24) zusammen mit dem Elektroinstallationsgerät (13) als Montageeinheit mit der Anschlusseinrichtung (25) verbindbar ist.
